# EUROPÄISCHE PATENTSCHRIFT

(11) **EP 1 391 951 B1**
(45) Veröffentlichungstag und Bekanntmachung des Hinweises auf die Patenterteilung: **05.10.2005**
(21) Anmeldenummer: 03009370.2
(22) Anmeldetag: 25.04.2003
(51) Int. Cl.: H01M 4/62, H01M 4/32

(54) **Alkalischer Akkumulator mit mittellangen Carbonfasern**
Alkaline accumulator with medium length carbon fibers
Accumulateur alcalin avec des fibres de carbone de longueur moyenne

(30) Priorität: 07.05.2002 DE 10220486
(43) Veröffentlichungstag der Anmeldung: 25.02.2004
(73) Patentinhaber: VARTA Automotive GmbH, 30419 Hannover (DE)
(72) Erfinder: Löffler, Jens, 30449 Hannover (DE); Stober, Michael, 31832 Springe (DE)
(74) Vertreter: Läufer, Martina

(56) Entgegenhaltungen:
- EP-A- 0 935 301
- US-A- 4 595 463
- PATENT ABSTRACTS OF JAPAN vol. 1998, no. 13, 30. November 1998 (1998-11-30) & JP 10 223228 A (SANYO ELECTRIC CO LTD), 21. August 1998 (1998-08-21)

## Beschreibung

Die Erfindung betrifft einen alkalischern Akkumulator zur Speicherung von elektrischer Energie mit einem geschlossenen Gehäuse, einer positiven Elektrode, einer negativen Elektrode und einem zwischen den Elektroden angeordneten Separator, wobei die positive Elektrode, als Trägermaterial ein Nickelschaumband, ein Nickelband oder vernickeltes gelochtes oder ungelochtes Stahlband und ein pastenförmiges aktives Material umfasst, das hauptsächlich aus Nickelhydroxid besteht, und Teilchen aus Kobalthydroxid oder Kobaltmonoxid sowie einen Binder enthält.

Die Druckschrift JP 59151758 A beschreibt die Herstellung einer pastierten Nikkelektrode. Die aktiven Masse wird aus 1kg Nickelhydroxid, das durch ein Sieb mit Maschenweite 200 gegeben wurde, 50 g Nickel-Carbonyl-Pulver, 80 g Graphitfasern mit einem Faserdurchmesser von 0,1 mm und einer Faserlänge von 3 bis 5 mm, 20 g Acryronitrile-Vinylchlotid-Fasern und etwa 30 g Kobalt-Carbonyl-Pulver gemischt, der 1 kg einer 3 gew %-igen wässrigen CarboxymethylZellulose-Lösung zur Anfertigung einer Paste zugefügt wird. Das Trägermaterial besteht aus 0,1 mm dickem, mit Löchern mit 2 mm Durchmesser versehenem und vernickeltem Stahlbandmaterial.

Das Dokument EP 634 804 A1 beschreibt eine positive Nickelelektrode für eine alkalische Speicherbatterie, die aus einer aktiven Materialmischung besteht, deren hauptsächliche Bestandteile Nickelhydroxid und Leitzusätze sind. Die aktive Materialmischung beinhaltet wenigstens einen der Bestandteile Kobalt, Kobalthydroxid und Kobaltoxid und Graphitpulver mit einer Gitterkonstante der (002)-Ebene d₀₀₂ von 3,35 bis 3,45 Angström.

In der Druckschrift EP 0658 948 B1 wird die positive Elektrode eines Nickel-Metallhydrid-Akkumulators beschrieben, die aus einer Massemischung von Nikkelhydroxid und einem oxidationsbeständigen Graphit gebildet wird. Der stabile Graphit zeichnet sich durch einen hohen Kristallinitätsgrad (Kristallgröße mindestens 180 nm) aus und besitzt einen niedrigen Aschegehalt < 0,5 %. Konventionellen Nickel-Metallhydrid-Akkumulatoren, bei denen Kobaltverbindungen am Aufbau des eines Leitgerüstes wesentlich beteiligt sind, erleiden bei Hochtemperatur-Lagerungstests massive Kapazitätseinbußen durch reduktive Zerstörungen des Leitgerüst. Durch die beschriebenen Massemischung wird dieser Effekt vermieden.

Die Druckschrift EP 09 35 301 offenbart eine pastierte Nickelelektrode für eine Speicherzelle mit alkalischem Elektrolyten, mit einer Elektrode aus einem Stromabnehmer und einer aktiven Masse auf der Basis von pulverförmigen Nickelhydroxid mit einem graphitbasierten Leitzusatz. Dieser Leitzusatz wird aus Graphitteilchen hergestellt, die gegen elektro-chemische Oxidation beständig sind und spezielle Eigenschaften besitzen. Der Graphit kann in Kugelform mit einem Durchmesser von kleiner oder gleich 500 nm und in Faserform mit einem Faserdurchmesser von 5 bis 15 µm und einer Faserlänge größer oder gleich 125 µm.

Der Erfindung liegt die Aufgabe zugrunde, einen alkalischen Akkumulator mit einer positiven Elektrode anzugeben, die durch eine verbesserte mechanische Elastizität und innere Leitfähigkeit des positiven aktiven Materials eine hohe Zyklenstabilität erreicht.

Die Aufgabe wird erfindungsgemäß mit einem alkalischen Akkumulator gelöst, wie er im Anspruch 1 definiert ist. Weitere vorteilhafte Ausgestaltungen sind in den Unteransprüchen gekennzeichnet.

Die Herstellung eines alkalischen Akkumulators mit einer positiven nassbeschichteten Elektrode mit verbesserten Zyklenfestigkeit ist möglich, wenn dem positiven aktiven Material als Leitmittel 9 bis 20 gew. % einer Graphitmischung zugesetzt wird, die zu mehr als 70 % aus faserförmigem Graphit mit einer Faserlänge von 10 bis 35 µm und einem Faserdurchmesser von 3 bis 8 µm besteht. Der Rest des Leitmittels - d.h. vorzugsweise 15 bis < 30 Gew.-% bezogen auf die Gesamt-Leitmittelmasse - kann aus im wesentlichen kugelförmigem Graphit mit einem Teilchendurchmesser d₅₀ von 3 bis 8 µm bestehen. Eine gute Leitfähigkeit wird auch bei Substitution des kugelförmigen Graphits durch Nickelpulver mit einer Teilchengröße von 3 bis 8 µm erreicht.

Ein zusätzliches Leitmittel innerhalb eines Elektrodenmaterials für die positive Elektrode eines Akkumulators, das zur Erhöhung der Leitfähigkeit dient, ist bereits aus WO00/10212 bekannt. Das Leitmittel ist in dem aktiven Material wenigstens teilweise eingebettet. Es kann aus Metall, Nickel, Kupfer, deren Legierungen, Oxiden, Nitriden, Carbiden, Siliciden, Boriden, Kohlenstoff oder Graphit bestehen, der auch faserförmig langgestreckt und verzweigt sein kann. Ein Zusammenhang zwischen Faserlänge, Faserstärke, Leitfähigkeit und mechanischer Festigkeit wird dort noch nicht kannt.

Bereits vor der Erfindung wurden kurze Graphitfasem als Zusatz zum Leitmittel des aktiven Elektrodenmaterials verwendet. Derartige kurze Graphitfasem von etwa bis zu 5 mm Länge, wie beispielsweise aus JP 59151758 bekannt, leisten einen wesentlichen Beitrag zur Gesamtleitfähigkeit des aktiven Materials, können jedoch nicht wesentlich zur mechanischem Stabilisierung beitragen.

In der WO00/44005 werden nickelbeschichtete Graphitfasem bis zu 2 cm Länge in einem Formkörper aus einem thermoplastischen, spritzgussfähigen Polymerharz verwendet, wobei der Formkörper einen geringen Volumenwiderstand unter 10⁻² ohm-cm besitzen soll. Rückschlüsse auf die Eigenschaften eines pastösen nickelbasierten positiven Elektrodenmaterials für Akkumulatoren sind, von dem für Brennstoffzellen vorgesehenen thermoplastischen Material ausgehend, nicht möglich.

Im Rahmen der Erfindung wurde nun gefunden, dass der Beitrag zur Leitfähigkeit bei längeren Fasern abnimmt, wobei diese jedoch die mechanische Belastbarkeit deutlich erhöhen. Die Steigerung der mechanischen Belastbarkeit kommt nach dezeitiger Erkenntnis durch Verbesserung der mechanischen Elastizität des aktiven Materials auf dem Träger zustande, was zu einer überraschend guten Stabilität des Akkumulators über eine große Zyklenzahl führt. Auch die Belastbarkeit gegenüber hohen Strömen/Stromdichten nimmt mit dem erfindungsgemäßen Material in unerwartetem Maße zu.

Eine verbesserte Haftung der positiven aktiven Masse an das Trägermaterial wird erreicht, wenn auf das vernickelte Stahlblech eine Schicht aus Nickelkömem mit einer Korngröße von kleiner oder gleich 20 µm aufgesintert ist, wobei die Massebelegung der Schicht aufgesinterter Nickelkörner 0,2 bis 0,7 g/dm² beträgt.

Die elektrische Anbindung der aufpastierten Elektrodenmasse wird noch weiter verbessert, wenn das Trägermaterial mit einer Schicht aus Kobaltoxid- oder Kobalt(II)oxid, die sich während der Formatierung in Kobalt(III)oxid umwandelt, versehen ist, deren Massebelegung bis zu 0,2 g/dm² beträgt.

Die weiteren Bestandteile der neuen positiven Elektrodenmasse sind vorzugsweise: 65 bis 85 Gew.-% Nickelhydroxid mit einem Teilchendurchmesser d₅₀ von 7 bis 12 µm, bis zu 10 Gew.-% Kobalthydroxid mit einem Teilchendurchmesser d₅₀ von 1 bis 5 µm, bis zu 10 Gew.-% Kobaltoxid mit einem Teilchendurchmesser d₅₀ von bis zu 1 µm und bis zu 2 Gew.-% Leitruß.

Der Mischung werden in vorteilhafter Ausgestaltung 2 bis 5 Gew.-% eines Binders zugefügt, der vorzugsweise in Form von faserförmigem Polytetrafluorethylen- oder Polyethylenpulver mit einer Faserlänge von 50 bis 100 µm oder einer wässrigen Dispersion, die zu 50 bis 80 % Binderpulver mit einer Teilchengröße von 100 bis 300 nm enthält.

Zum besseren Verständnis und zur Darstellung der Vorteile der Erfindung dienen die folgenden Beispiele, die allein der Illustration dienen, ohne dass hierin eine Einschränkung der Erfindung zu sehen ist.

### BEISPIELE

### Beispiel 1 (Vergleichsbeispiel):

Bekannte Verfahren zur Nasspastierung benutzen vorzugsweise reines NickelPulver als Leitmaterial. Für Referenzmessungen wird die folgende Massemischung benutzt:

| | |
|---|---|
| Ni(OH)₂ | 63 Gew.-%, |
| Ni-Pulver | 20 Gew.-%, |
| Co-Oxid | 10 Gew.-%, |
| Graphit | 4 Gew.-%, |
| Leitruß | 1 Gew.-% |
| Kunststoffbinder | 2 Gew.-%, |

Die so hergestellte Paste wurde auf ein vernickeltes Lochblech aufgetragen, getrocknet, gewalzt und Lebensdauertests unterzogen.

### Beispiel 2:

Ein erfindungsgemäßer Akkumulator wurde mit einer nasspastierten Elektrode hergestellt, für die folgende Masse verwendet wurde:

| | |
|---|---|
| Ni(OH)₂ | 71 Gew.-%, |
| Co(OH)₂ | 10 Gew.-%, |
| Graphit | 14 Gew.-%, |
| Leitruß | 1 Gew.-%, |
| Kunststoffbinder | 4 Gew.-%, |

Der Graphit besteht in diesem Beispiel zu 20 % aus kugelförmigem Graphit mit einem Partikeldurchmesser von 3 bis 8 µm und zu 80 % aus faserförmigem Graphit mit einem Faserdurchmesser von 3 bis 8 µm sowie einer Faserlänge von 15 bis 35 µm., wobei es sich um eine Mischung unterschiedlich langer und unterschiedlich dicker Fasern in diesem genannten Längen- und Durchmesserbereich handelt.Die so hergestellte Paste wird auf ein vernickeltes Lochblech aufgetragen, getrocknet und Lebensdauertests unterzogen.

Im folgenden wird auf die beigefügten Figuren Bezug genommen. Es zeigen:
- Figur 1:: eine graphische Darstellung der Ergebnisse eines Lebensdauertests;
- Figur 2:: die Darstellung der Ergebnisse von Belastungstests.

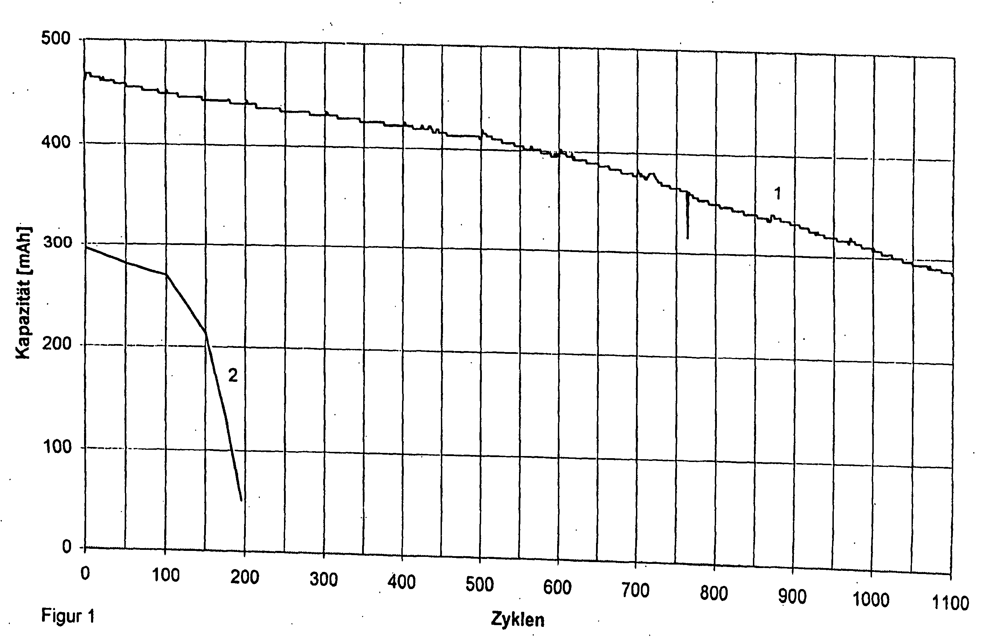

Wie in Figur 1 dargestellt, besitzt ein alkalischer Akkumulator mit einer nasspastierten positiven Elektrode nach Beispiel 1 (Kapazitätsverlauf entsprechend Kurve 2) eine vergleichsweise geringere Kapazität, die schon nach 150 Ladezyklen auf weniger als 70% der Anfangskapazität absinkt. Die Anfangskapazität der alkalischen Akkumulatoren (Kapazitätsverlauf entsprechend Kurve 1) mit einer entsprechend Beispiel 2 hergestellten positiven Elektrode ist ca. 50 % größer. Die Akkumulatoren sind überraschend stabil. Ihre Kapazität sinkt erst nach etwa 850 Ladezyklen auf etwa 70 % der Ausgangskapazität.

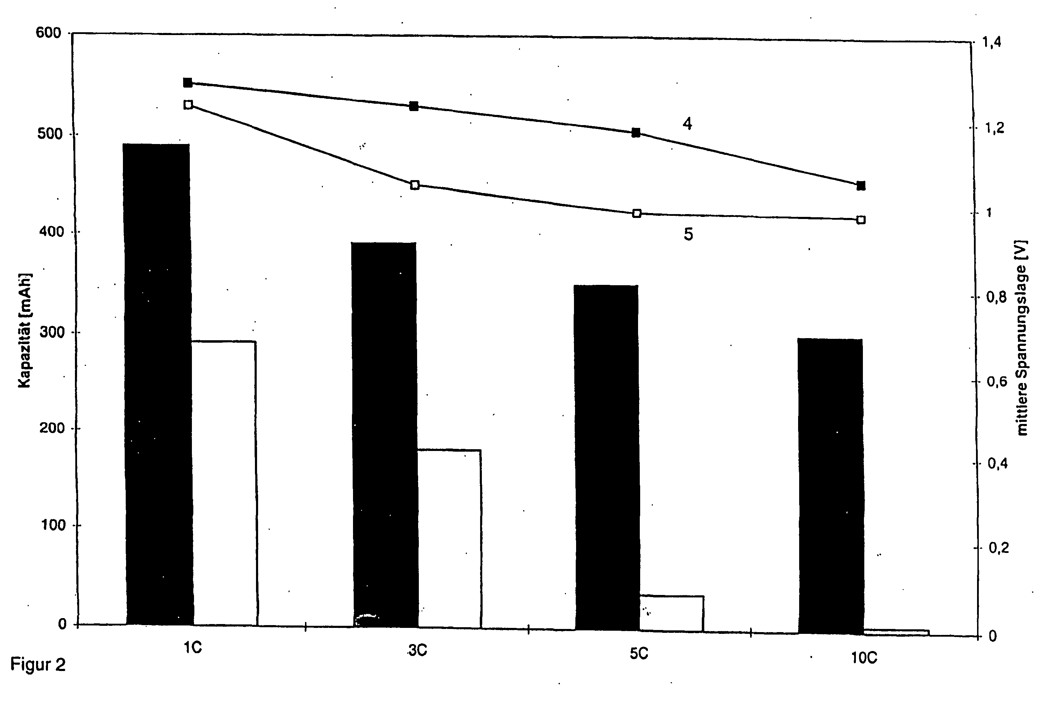

Die Grafik in Figur 2 ist eine Darstellung der Ergebnisse von Tests zur Ermittelung der Kapazität der Akkumulatoren bei einer Belastung mit 1- (1C), 3- (3C), 5-(5C) und 10-fachem (10C) Nennstrom. Zusätzlich ist dem Diagramm die mittlere Spannungslage der beiden Ausführungen der Akkumulatoren bei der jeweiligen Belastung zu Entnehmen. Die erfindungsgemäßen Akkumulatoren, schwarzer Balken, sind den Vergleichsakkumulatoren , weißer Balken, deutlich überlegen. Bei Hochstrombelastung sinkt die Kapazität der erfindungsgemäßen Akkumulatoren um etwa 37,5 %, die der Vergleichsakkumulatoren um über 98 %. Dabei sinkt die mittlere Spannung der neuen Akkumulatoren (Kurve 4) weniger stark als die der Akkumulatoren mit herkömmlicher nasspastierter positiver Elektrode (Kurve 5).

## Patentansprüche

1. Alkalischer Akkumulator zur Speicherung von elektrischer Energie mit einem geschlossenen Gehäuse, einer positiven Elektrode, einer negativen Elektrode und einem zwischen den Elektroden angeordneten Separator, wobei die positive Elektrode, als Trägermaterial ein Nickelschaumband, ein Nickelband oder vernikkeltes gelochtes oder ungelochtes Stahlband und ein pastenförmiges aktives Material umfasst, das hauptsächlich aus Nickelhydroxid besteht, und Teilchen aus Kobalthydroxid oder Kobaltmonoxid sowie einen Binder enthält,
**dadurch gekennzeichnet, dass** das aktive Material der positiven Elektrode als Leitmittel 9 bis 20 Gew.-% einer Graphitmischung enthält, die zu mehr als 70 % aus faserförmigem Graphit mit einer Faserlänge von 10 bis 35 µm und einem Faserdurchmesser von 3 bis 8 µm besteht.

2. Alkalischer Akkumulator nach Anspruch 1, **dadurch gekennzeichnet, dass** die Graphitmischung des aktiven Materials neben dem faserförmigen Graphit im Wesentlichen kugelförmigen Graphit mit einem Teilchendurchmesser d₅₀ von 3 bis 8 µm enthält.

3. Alkalischer Akkumulator nach Anspruch 1 oder 2, **dadurch gekennzeichnet, dass** auf das Trägermaterial eine Schicht aus Nickelkörnern mit einer Korngröße von kleiner oder gleich 20 µm aufgesintert ist.

4. Alkalischer Akkumulator nach einem der Ansprüche 1 bis 3, **dadurch gekennzeichnet, dass** die Massebelegung der Schicht aufgesinterter Nickelkörner 0,2 bis 0,7 g/dm² beträgt.

5. Alkalischer Akkumulator nach einem der Ansprüche 1 bis 4, **dadurch gekennzeichnet, dass** das Trägermaterial mit einer Schicht aus Kobalt(III)oxid- oder Kobalt(II)oxid, das sich während der Formatierung in Kobalt(III)oxid umwandelt, versehen ist.

6. Alkalischer Akkumulator nach einem oder mehreren der Ansprüche 1 bis 5, **dadurch gekennzeichnet, dass** die Massebelegung der Schicht aus Kobaltoxid- oder Kobalt(II)oxid bis zu 0,2 g/dm² ist.

7. Alkalischer Akkumulator nach einem oder mehreren der Ansprüche 1 bis 6, **dadurch gekennzeichnet, dass** das positive aktive Material zu 65 bis 85 Gew.-% aus Nickelhydroxid mit einem Teilchendurchmesser d₅₀ von 7 bis 12 µm besteht.

8. Alkalischer Akkumulator nach einem oder mehreren der Ansprüche 1 bis 7, **dadurch gekennzeichnet, dass** das positive aktive Material bis zu 10 Gew.-% aus Kobalthydroxid mit einem Teilchendurchmesser d₅₀ von 1 bis 5 µm besteht.

9. Alkalischer Akkumulator nach einem oder mehreren der Ansprüche 1 bis 8, **dadurch gekennzeichnet, dass** das positive aktive Material bis zu 10 Gew.-% aus Kobaltoxid mit einem Teilchendurchmesser d₅₀ von bis zu 1 µm besteht.

10. Alkalischer Akkumulator nach einem oder mehreren der Ansprüche 1 bis 9, **dadurch gekennzeichnet, dass** das positive aktive Material bis zu 30 Gew.-% aus Nickelpulver mit einem Teilchendurchmesser d₅₀ von 3 bis 8 µm besteht.

11. Alkalischer Akkumulator nach einem oder mehreren der Ansprüche 1 bis 10, **dadurch gekennzeichnet, dass** das positive aktive Material bis zu 2 Gew.-% Leitruß enthält.

12. Alkalischer Akkumulator nach einem oder mehreren der Ansprüche 1 bis 11, **dadurch gekennzeichnet, dass** das positive aktive Material 3 bis 5 Gew.-% eines Binders aus Kunststoff enthält, vorzugsweise ein faserförmiges Polytetrafluorethylen- oder Polyethylenpulver mit einer Faserlänge von 50 bis 100 µm.

13. Alkalischer Akkumulator nach einem oder mehreren der Ansprüche 1 bis 12, **dadurch gekennzeichnet, dass** das positive aktive Material 3 bis 5 Gew.-% eines Binders enthält, der in Form einer wässrigen Polyethylen- oder Polytetrafluorethylendispersion zugesetzt ist, die zu 50 bis 80 % Polyethylen- oder Polytetrafluorethylenpulver mit einer Teilchengröße von 100 bis 300 nm enthält.

## Claims

1. Alkaline rechargeable battery for storage of electrical energy, having a closed housing, a positive electrode, a negative electrode and a separator which is arranged between the electrodes, with the positive electrode having as substrate material a nickel foam strip, a nickel strip or nickel-plated, perforated or unperforated steel strip and an active material in the form of paste which is composed mainly of nickel hydroxide, and contains particles of cobalt hydroxide or cobalt monoxide as well as a binding agent,
**characterized in that** the active material of the positive electrode contains as the conductive agent 9 to 20% by weight of a graphite mixture, more than 70% of which is composed of fibrous graphite with a fibre length of 10 to 35 µm and a fibre diameter of 3 to 8 µm.

2. Alkaline rechargeable battery according to Claim 1, **characterized in that** the graphite mixture of the active material contains essentially spherical graphite, with a particle diameter d₅₀ of 3 to 8 µm, in addition to the fibrous graphite.

3. Alkaline rechargeable battery according to Claim 1 or 2, **characterized in that** a layer of nickel grains with a grain size of not more than 20 µm is sintered onto the substrate material.

4. Alkaline rechargeable battery according to one of Claims 1 to 3, **characterized in that** the mass per unit area of the layer of sintered-on nickel grains is 0.2 to 0.7 g/dm².

5. Alkaline rechargeable battery according to one of Claims 1 to 4, **characterized in that** the substrate material is provided with a layer of cobalt (III) oxide or cobalt (II) oxide, which is converted during the formatting process into cobalt (III) oxide.

6. Alkaline rechargeable battery according to one or more of Claims 1 to 5, **characterized in that** the mass per unit area of the layer of cobalt oxide or cobalt (II) oxide is up to 0.2 g/dm².

7. Alkaline rechargeable battery according to one or more of Claims 1 to 6, **characterized in that** up to 65 to 85% by weight of the positive active material is composed of nickel hydroxide with a particle diameter d₅₀ of 7 to 12 µm.

8. Alkaline rechargeable battery according to one or more of Claims 1 to 7, **characterized in that** up to 10% by weight of the positive active material is composed of cobalt hydroxide with a particle diameter d₅₀ of 1 to 5 µm.

9. Alkaline rechargeable battery according to one or more of Claims 1 to 8, **characterized in that** up to 10% by weight of the positive active material is composed of cobalt oxide with a particle diameter d₅₀ of up to 1 µm.

10. Alkaline rechargeable battery according to one or more of Claims 1 to 9, **characterized in that** up to 30% by weight of the positive active material is composed of nickel powder with a particle diameter d₅₀ of 3 to 8 µm.

11. Alkaline rechargeable battery according to one or more of Claims 1 to 10, **characterized in that** the positive active material contains up to 2% by weight of conductive carbon black.

12. Alkaline rechargeable battery according to one or more of Claims 1 to 11, **characterized in that** the positive active material contains 3 to 5% by weight of a binding agent composed of plastic, preferably a fibrous polytetrafluorethylene or polyethylene powder with a fibre length of 50 to 100 µm.

13. Alkaline rechargeable battery according to one or more of Claims 1 to 12, **characterized in that** the positive active material contains 3 to 5% by weight of a binding agent, which is added in the form of an aqueous polyethylene or polytetrafluorethylene dispersion, which contains from 50 to 80% of polyethylene of polytetrafluorethylene powder with a particle size of 100 to 300 nm.

## Revendications

1. Pile alcaline pour accumulation d'énergie électrique comportant un boîtier fermé, une électrode positive, une électrode négative et un séparateur disposé entre les électrodes, dans lequel l'électrode positive comprend comme matériau de support une bande en mousse de nickel, une bande en nickel ou une bande perforée ou non perforée en acier nickelé, et un matériau actif sous forme de pâte qui, constitué principalement d'hydroxyde de nickel, contient des particules d'hydroxyde de cobalt ou de monoxyde de cobalt et un liant,
**caractérisée en ce que**
le matériau actif de l'électrode positive contient comme milieu conducteur de 9 à 20 % en poids d'un mélange de graphite constitué à plus de 70 % de graphite sous forme fibreuse ayant une longueur de fibres de 10 à 35 µm et un diamètre de fibres de 2 à 8 µm.

2. Pile alcaline selon la revendication 1,
**caractérisée en ce que**
le mélange de graphite du matériau actif contient, en plus du graphite sous forme fibreuse, du graphite essentiellement sous forme de billes, avec un diamètre de particules d₅₀ de 3 à 8 µm.

3. Pile alcaline selon la revendication 1 ou 2,
**caractérisée en ce que**
sur le matériau de support, une couche de grains de nickel ayant une granulométrie inférieure ou égale à 20 µm est agglomérée par frittage.

4. Pile alcaline selon l'une quelconque des revendications 1 à 3,
**caractérisée en ce que**
le poids surfacique de grains de nickel agglomérés par frittage est de 0,2 à 0,7 g/dm².

5. Pile alcaline selon l'une quelconque des revendications 1 à 4,
**caractérisée en ce que**
la couche de support est munie d'une couche d'oxyde de cobalt(III) ou d'oxyde de cobalt(II) qui se transforme, pendant le formatage, en oxyde de cobalt(III).

6. Pile alcaline selon l'une quelconque des revendications 1 à 5,
**caractérisée en ce que**
le poids surfacique de la couche d'oxyde de cobalt(III) ou de colbalt(II) va jusqu'à 0,2 g/dm².

7. Pile alcaline selon l'une quelconque ou plusieurs des revendications 1 à 6,
**caractérisée en ce que**
le matériau actif positif est constitué pour 65 à 85 % en poids d'hydroxyde de nickel ayant un diamètre de particules d₅₀ de 7 à 12 µm.

8. Pile alcaline selon l'une quelconque ou plusieurs des revendications 1 à 7,
**caractérisée en ce que**
le matériau actif positif est constitué jusqu'à 10 % en poids d'hydroxyde de cobalt ayant un diamètre de particules d₅₀ de 1 à 5 µm.

9. Pile alcaline selon l'une quelconque ou plusieurs des revendications 1 à 8,
**caractérisée en ce que**
le matériau actif positif est constitué jusqu'à 10 % en poids d'oxyde de cobalt ayant un diamètre de particules d₅₀ de jusqu'à 1 µm.

10. Pile alcaline selon l'une quelconque ou plusieurs des revendications 1 à 9,
**caractérisée en ce que**
le matériau actif positif est constitué jusqu'à 30 % en poids de poudre de nickel d'un diamètre de particules d₅₀ de 3 à 8 µm.

11. Pile alcaline selon l'une quelconque ou plusieurs des revendications 1 à 10,
**caractérisée en ce que**
le matériau actif positif contient jusqu'à 2 % en poids de suie conductrice.

12. Pile alcaline selon l'une quelconque ou plusieurs des revendications 1 à 11,
**caractérisée en ce que**
le matériau actif positif contient de 3 à 5 % en poids d'un liant en matière plastique, de préférence une poudre de polytétrafluoroéthylène ou de polyéthylène sous forme fibreuse, ayant une longueur de fibres de 50 à 100 µm.

13. Pile alcaline selon l'une quelconque ou plusieurs des revendications 1 à 12,
**caractérisée en ce que**
le matériau actif positif contient de 3 à 5 % en poids d'un liant ajouté sous la forme d'une dispersion aqueuse de polyéthylène ou de polytétrafluoroéthylène, qui contient de 50 à 80 % de poudre de polyéthylène ou de polytétrafluoroéthylène ayant une granulométrie de 100 à 300 nm.
